(19) Europäisches Patentamt
European Patent Office
Office européen des brevets

(11) Veröffentlichungsnummer: **0 320 600**
**A2**

(12) # EUROPÄISCHE PATENTANMELDUNG

(21) Anmeldenummer: **88117377.7**

(22) Anmeldetag: **19.10.88**

(51) Int. Cl.[4]: **C08G 63/60 , C08G 63/68 , C08L 67/00**

(30) Priorität: **12.12.87 DE 3742205**

(43) Veröffentlichungstag der Anmeldung: **21.06.89 Patentblatt 89/25**

(84) Benannte Vertragsstaaten: **BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Poll, Heinz-Günter, Dr.**
**Tucherweg 80**
**D-4010 Hilden(DE)**
Erfinder: **Neugebauer, Wolfgang, Dr.**
**Karl-Leisner-Strasse 3**
**D-4408 Dülmen-Merfeld(DE)**
Erfinder: **Bartmann, Martin, Dr.**
**Burgstrasse 35**
**D-4350 Recklinghausen(DE)**
Erfinder: **Finke, Jürgen, Dr.**
**Am Alten Sportplatz 17 a**
**D-4370 Marl(DE)**

(54) **Formmassen bestehend aus einem thermotropen, aromatischen Polyester.**

(57) Es sollen besser verarbeitbare, chemikalienresistente Polyester zur Verfügung gestellt werden.

Dies wurde erreicht durch Polyester, enthaltend die Reste nachstehender Ausgangsmonomeren:

A. 10 - 80 Mol.-% HO-Ar-COOH
B. 0 - 40 Mol.-% HOOC-Ar′-COOH
C. 10 - 45 Mol.-% HO-Ar″-OH
D. 5 - 45 Mol.-%

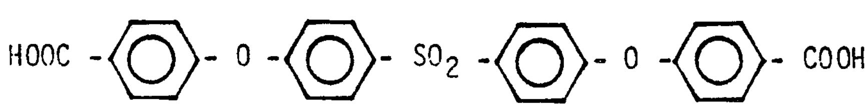

Mit Hilfe der Erfindung gelingt es, besser verarbeitbare, chemikalienresistente Formmassen zur Verfügung zu stellen.

EP 0 320 600 A2

Xerox Copy Centre

## Formmassen bestehend aus einem thermotropen, aromatischen Polyester

Gegenstand der Erfindung sind Formmassen bestehend aus einem thermotropen, aromatischen Polyester.

Thermotrope, aromatische Polyester aufgebaut aus Terephthalsäure, Isophthalsäure, p-Hydroxibenzoesäure und Bisphenolen sind bekannt (DE-OS 20 25 971). Die Schmelzpunkte der dort beschriebenen Polyester liegen im allgemeinen über 300 °C, teilweise sogar über 400 °C. Derartige Polyester lassen sich schlecht verarbeiten.

Polyester mit verbesserter Verarbeitbarkeit enthalten neben den bereits bekannten Ausgangsmonomeren z. B. noch Benzophenondicarbonsäure (DE-OS 34 27 886) oder Dihydroxibenzophenon (DE-OS 34 15 530). Nicht befriedigen konnte dagegen die Wärmeformbeständigkeit der nach diesem Stand der Technik hergestellten Formteile.

Polyester, die Reste sulfongruppenhaltiger Ausgangsstoffe enthalten, sind aus EP-PS 0 081 900 bekannt. Die Druckschrift beansprucht jedoch diese Ausgangsstoffe in einer solchen Breite, daß es unmöglich ist, besonders vorteilhafte Bereiche zu erkennen. Ferner beschreibt DE-OS 3 542 778 vollaromatische mesomorphe Polyetherester, bei denen als Monomeres u. a. 4,4′-Di(p-hydroxiphenoxi)diphenylsulfon eingesetzt wurde, das jedoch nicht frei von Oligomeren erhalten werden kann.

Aufgabe der Erfindung war es, leicht verarbeitbare aromatische Polyester mit hoher Chemikalienresistenz bereitzustellen.

Die Aufgabe wird durch Polyester gelöst, die Reste nachstehender Ausgangsmonomeren enthalten:

A. 10 - 80 Mol.-% HO-Ar-COOH
B. 0 - 40 Mol.-% HOOC-Ar′-COOH
C. 10 - 45 Mol.-% HO-Ar″-OH
D. 5 - 45 Mol.-%

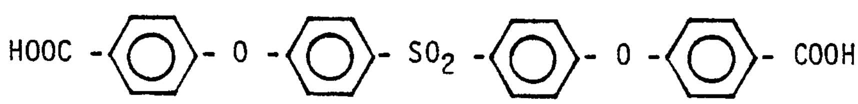

hierbei bedeutet
Ar, Ar′, Ar″: 1.3- oder 1.4-Phenylen; 1.4-, 1.5-, 2.6-oder 2.7-Naphthylen
oder

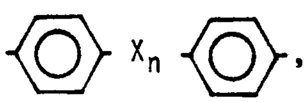

Ar, Ar′ und Ar″ können gleich oder ungleich sein;
X: -O-; -S-; $-SO_2$; $-CR_2$;
R: -H, $C_1$ - $C_4$-Alkyl;
n: 0 oder 1;
alle Mengenangaben beziehen sich auf die Summe von A. bis D., und sie müssen in der Summe 100 Mol.-% ergeben, wobei das molare Verhältnis (B. + D.) : C. im Bereich von 0,9 : 1 bis 1,1 : 1 liegt.

Als aromatische Hydroxicarbonsäuren (Komponente A.) kommen p-Hydroxibenzoesäure, m-Hydroxibenzoesäure, 1.4- oder 2.6-Hydroxinaphthoesäure infrage.

Als aromatische Dicarbonsäuren (Komponente B.) werden Isophthalsäure, Terephthalsäure, 1.4-, 1.5-, 2.6-, 2.7-Naphthalindicarbonsäure, 4.4′-Diphenyletherdicarbonsäure oder 4.4′-Benzophenondicarbonsäure oder Gemische davon eingesetzt.

Als aromatische Dihydroxiverbindungen (Komponente C.) werden folgende Verbindungen eingesetzt: Hydrochinon, Resorcin, 1.3-, 1.4-, 1.5-, 2.6-, 2.7-Dihydroxinaphthalin, 4.4′- oder 3.4′-Dihydroxibiphenyl, 4.4′- oder 3.4′-Dihydroxidiphenylether, 4.4′-Dihydroxidiphenylsulfon oder Gemische davon.

Bevorzugt eingesetzt werden p-Hydroxibenzoesäure; Iso- und/oder Terephthalsäure; Hydrochinon, 4.4′-Dihydroxibiphenyl; 4.4′-Bis-(4-carboxiphenoxi)diphenylsulfon.

Die Komponente A. wird bevorzugt eingesetzt in Mengen von 30 bis 70 Mol.-%, die Komponente B. in

Mengen von 5 bis 25 Mol-%, die Komponente C. in Mengen von 15 bis 35 Mol-% und die Komponente D. in Mengen von 10 bis 20 Mol-%.

In einer weiteren bevorzugten Ausführungsform werden solche Polyester eingesetzt, in denen das Molverhältnis der Komponenten B. : D. im Bereich 1 : 2 bis 2 : 1 liegt. Das molare Verhältnis von (B. + D.) : C. bewegt sich im Bereich von 0,9 : 1 bis 1,1 : 1.

Sofern nicht ausdrücklich anders angegeben beziehen sich die Mengenangaben der Einzelkomponenten auf die Summe der Komponenten A. bis D. Hierbei müssen sie in der Summe 100 Mol.-% ergeben.

Die Polyester weisen eine reduzierte Viskosität ($eta_{red}$) von mindestens 0,5 dl/g, vorzugsweise von mindestens 1,0 dl/g auf.

Die Herstellung thermotroper, aromatischer Polyester ist grundsätzlich bekannt (Polymer 15, 527 (1974); Polymer 27, 441 (1986).

Die Reaktion erfolgt in zwei Schritten. Zuerst wird eine Um- oder Veresterung durchgeführt. Hieran schließt sich eine Polykondensation an. Die Polykondensation kann in Abwesenheit oder auch in Anwesenheit von Katalysatoren durchgeführt werden.

Bei Verwendung von Katalysatoren werden diese in Mengen von 0,001 bis 0,5 Gew.-%, vorzugsweise von 0,01 bis 0,1 Gew.-%, bezogen auf die Summe der Monomeren eingesetzt. Geeignete Katalysatoren sind z. B. Alkali- bzw. Erdalkaliacetate, Zinkacetat, Manganacetat, Germaniumdioxid, Antimontrioxid, Organozinnverbindungen sowie Titan- und Zirkonalkhoholate. Die Katalysatoren sind als solche bekannt und werden z. B. in V. V. Korshak and S. Vinogradova, Polyesters, Pergamon Press (1965) beschrieben.

Die Polyester können bekannte Verzweigungsmittel wie z. B. Trimesinsäure, Pyromellithsäure oder ein Trihydroxibenzol o. ä. enthalten.

Die Herstellung der Formmassen erfolgt nach bekannten Methoden des Standes der Technik. So wird z. B. der Polyester in einer Spritzgußmaschine aufgeschmolzen und in eine Form gespritzt.

Neben den thermotropen, aromatischen Polyestern können die Formmassen noch übliche Hilfs- und Zusatzstoffe wie Pigmente, UV-Stabilsatoren, Antioxidantien bzw. noch weitere Stabilisatoren, Füllstoffe etc. enthalten.

Die Formmassen können nach üblichen Verfahren wie Spritzguß, Extrusion o. ä. zu Formteilen, Fasern, Folien usw. verarbeitet werden.

Die erfindungsgemäßen Formmassen haben überraschend gute Chemikalienresistenz bei gleichzeitig ausgezeichneter Verarbeitbarkeit.

Die reduzierte Viskosität ($eta_{red}$) wird an einer Lösung des Polyesters in Phenol/o-Dichlorbenzol 50/50 (5 g/l) bei 25 °C bestimmt.

Der Glaspunkt ($T_g$) und der Schmelzpunkt ($T_m$) werden mit Hilfe von DSC bei einer Aufheizrate von 10 °C/min bestimmt.

## Beispiele

### Beispiel 1

15,70 g 4.4′-Bis(p-carboxyphenoxi)diphenylsulfon (32,00 mmol), 6,28 g Hydrochinondiacetat (32,3 mmol), 5,77 g p-Acetoxybenzoesäure (32,00 mmol) und 0,028 g amorphes Germaniumdioxid wurden zusammen unter einer Stickstoffatmosphäre bei gleichzeitigem Abdestillieren der gebildeten Essigsäure je 30 min bei 260, 280, 300 und 320 °C gerührt. Nach dem Abkühlen wurde das erhaltene Vorkondensat pulverisiert und in fester Phase bei 0,5 Torr nachkondensiert (30 min bei 200 °C, 4 Stunden bei 260 °C und 4 Stunden bei 280 °C). $Eta_{red}$ = 0,74 dl/g, $T_g$ = 156 °C; $T_m$ = 306 °C. Die Schmelze zeigte unter dem Polarisationsmikroskop bei gekreuzten Polarisatoren von 306 bis 344 °C eine Schlierentextur, wie sie für nematische Phasen typisch ist.

### Beispiel 2

24,53 g 4.4′-Bis(p-carboxyphenoxi)diphenylsulfon (50,0 mmol), 9,31 g 4.4′-Dihydroxibiphenyl (50,0 mmol), 20,72 g 4-Hydroxibenzoesäure (150,0 mmol) und 35,73 g Essigsäureanhydrid (350 mmol) wurden unter Stickstoff auf 260 °C aufgeheizt. Die Mischung wurde 30 min bei 260 °C, dann 15 min bei 280 °C, 15 min bei 300 °C und 15 min bei 320 °C gerührt, wobei letzte Reste von Essigsäureanhydrid und Essigsäure abdestillierten. Zur Vervollständigung der Reaktion wurde bei 320 °C Vakuum angelegt (1

mbar). Nach 1 Stunde wurde Stickstoff aufgegeben und die Schmelze entnommen. $Eta_{red}$ = 1,44 dl/g; $T_g$ = 154 °C; $T_m$ = 302 °C. Im Polarisationsmikroskop zeigte die Schmelze bei gekreuzten Polarisatoren von 302 bis 385 °C (Meßgrenze) eine für nematische Phasen typische Schlierentextur.

Der Polyester ließ sich bei 330 °C zu einer Platte verpressen. Diese zeigte bei 7-tägiger Lagerung in Methylenchlorid keine Veränderung.

Beispiele 3 bis 8

Die Polyester wurden gemäß Beispiel 2 hergestellt. Die Zusammensetzungen und Eigenschaften sind in der Tabelle zusammengestellt.

Tabelle

| Beispiel | Zusammensetzung | [Mol-%] | $T_g$ [°C] | $T_m$ [°C] | $eta_{red}$ [dl/g] |
|---|---|---|---|---|---|
| 3 | ESCA*) // Hy//PHB | 16,7//16,7//66,7 | 159 | 332 | 1,47 |
| 4 | ESCA // Hy//PHB | 20 //20 //60 | 150 | 320 | 1,18 |
| 5 | ESCA // Hy//PHB | 25 //25 //50 | 143 | 302 | 1,78 |
| 6 | ESCA //DHB//MHB | 20 //20 //60 | 188 | 282 | 1,02 |
| 7 | ESCA/IS/TS// Hy//PHB | 5/15/5//25 //50 | 139 | 287 | - **) |
| 8 | ESCA/IS // Hy//PHB | 7,5/17,5//25 //50 | 145 | 262 | - **) |

*) ESCA: 4.4'-Bis-(4-carboxiphenoxi)diphenylsulfon
Hy: Hydrochinon
PHB: p-Hydroxibenzoesäure
DHB: 4.4'-Dihydroxibiphenyl
MHB: m-Hydroxibenzoesäure
IS: Isophthalsäure
TS: Terephthalsäure

**) -: unlöslich in Phenol/o-Dichlorbenol

**Ansprüche**

1. Formmasse bestehend aus einem thermotropen, aromatischen Polyester enthaltend die Reste nachstehender Augangsmonomeren:
A. 10 - 80 Mol.-% HO-Ar-COOH

B. 0 - 40 Mol.-% HOOC-Ar′-COOH
C. 10 - 45 Mol.-% HO-Ar″-OH
D. 5 - 45 Mol.-%

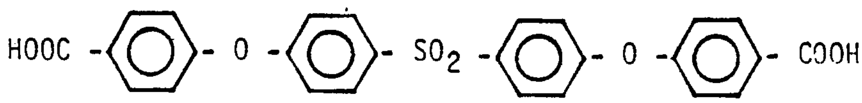

hierbei bedeutet
Ar, Ar′, Ar″: 1.3- oder 1.4-Phenylen; 1.4-, 1.5-, 2.6-oder 2.7-Naphthylen
oder

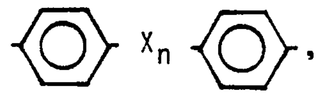

Ar, Ar′ und Ar″ können gleich oder ungleich sein;
X: -O-; -S-; $-SO_2$; $-CR_2$;
R: -H, $C_1$ - $C_4$-Alkyl;
n: 0 oder 1;
alle Mengenangaben beziehen sich auf die Summe von A. bis D. und sie müssen in der Summe 100 Mol.-% ergeben, wobei das molare Verhältnis (B. + D.) : C. im Bereich von 0,9 : 1 bis 1,1 : 1 liegt.

2. Formmasse gemäß Anspruch 1 mit der Bedeutung von
Ar: 1.4-Phenylen.

3. Formmasse gemäß Anspruch 1 und 2 mit der Bedeutung von
Ar′: 1.3- oder 1.4-Phenylen
oder ein Gemisch davon.

4. Formmasse gemäß den Ansprüchen 1 bis 3 mit der Bedeutung von
Ar″: 1.4-Phenylen oder 4.4′-Biphenylen
oder ein Gemisch davon.

5. Formmasse gemäß den Ansprüchen 1 bis 4, die einen Polyester enthält, bei dem die Komponente D. zumindest 20 Mol.-% in der Summe der Komponenten B. und D. ausmacht.

6. Formmasse gemäß den Ansprüchen 1 bis 4, die einen Polyester enthält, bei dem die Komponente D. zumindest 30 Mol.-% in der Summe der Komponenten B. und D. ausmacht.

7. Formmasse gemäß den Ansprüchen 1 bis 6, die einen Polyester mit einer reduzierten Viskosität ($eta_{red}$) von mindestens 0,5 dl/g enthält.